# EUROPEAN PATENT APPLICATION

(11) **EP 3 553 776 A1**
(43) Date of publication of application: **16.10.2019**
(21) Application number: 18305449.3
(22) Date of filing: 12.04.2018
(51) Int. Cl.: G10L 17/10, G06F 21/32, G06K 9/00, G10L 25/03, G10L 25/87

(54) **DEVICE AND METHOD FOR IDENTIFYING USERS USING VOICE AND GAIT INFORMATION**

(71) Applicant: InterDigital CE Patent Holdings, 75017 Paris (FR)
(72) Inventor: GUEGAN, Marie, 35576 Cesson-Sévigné (FR); KITIC, Srdan, 35576 Cesson-Sévigné (FR); HOWSON, Christopher, 35576 Cesson-Sévigné (FR); GILBERTON, Philippe, 35576 Cesson-Sévigné (FR)
(74) Representative: Huchet, Anne

(57) **Abstract**

A user identification method and device based on a specially tailored Factorial Hidden Markov Model (FHMM) which exploits voice and gait activity to infer users, all in an unsupervised manner.

## Description

### TECHNICAL FIELD

The present disclosure relates to the domain of user identification and more particularly allows to identify a user using voice and gait information.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The use of voice control in the residential environment through home assistant devices such as Amazon Echo or Google Home as well as home assistant services such as Microsoft Cortana or Apple Siri has become a mass market reality; such devices or services are used in millions of homes. A home assistant device captures natural speech from users of the household through microphones, analyses the user query and provides appropriate response or service. The queries to be performed can make use of in-home devices (e.g.: muting the sound of the TV off, etc.) but also out-of-home services (e.g.: retrieving the weather forecast or stock values, etc.). In addition, some home assistant devices also perform speaker recognition. Such recognition enables multiple features such as access control (e.g.: a child cannot configure the home network, cannot access adult movies, etc.), personalisation of the interactions (e.g.: the vocabulary of the interaction can be adapted to the category of speaker chosen among young children, teenagers, adults or senior persons) or even intruder detection.

Speaker diarization is, in theory, capable of determining "who spoke when?" in an audio recording that contains an unknown amount of speech with an unknown number of speakers. It involves segmenting audio into speaker-homogeneous regions and annotating regions from each individual speaker with a single label in an unsupervised manner. It implies techniques that detect speech, segment the audio timeline and cluster the speaker models. Ideally the result is a number of speaker models equal to the number of speakers in the recording(s). The main applications for speaker diarization to date are for transcripts of broadcast audio and meetings. These acoustic environments are somewhat less challenging than the in-home case which contains, in particular, speech from both users and media devices, significant impulsive noise such as doors shutting and speech from a varying number of people (entering or leaving the room). Some solutions have been described to improve diarization performance. First, multi-microphone beamforming provides directional information which can help discriminate one speaker from another in the case where several speakers are present at the same time. Second, the addition of video features (e.g. lip motion) provides additional user-dependent features. However at least one drawback of those solutions is that they require additional sensors.

It can therefore be appreciated that there is a need for a solution for residential speaker recognition that addresses at least some of the problems of the prior art. The present disclosure provides such a solution.

### SUMMARY

Whilst audio signals in the home clearly capture speech, the captured signal also includes footfalls. Both information are biometric characteristics of an individual. Diarization performance can be improved by exploiting the information available in audio signals generated by footfall in addition to the conventional approach of voice-only signals. The approach is challenging since the two modalities are not necessarily present at the same time and, when they are, they interfere with one another. The present disclosure describes a user identification method and device based on a specially tailored Factorial Hidden Markov Model (FHMM), which exploits voice and gait activity to infer users, all in an unsupervised manner.

In a first aspect, the disclosure is directed to a method for identifying user comprising: extracting features from a captured audio signal comprising at least vocal utterances and footsteps of user; segmenting the extracted features according to voice or gait modality; building a sequence of observations from the segmented features; and identifying the user by selecting, for each observation within the sequence, the couple of user and modality that maximises the probability that the observation was generated by the selected user in the selected modality according to a learned model. In a first variant of first aspect, the learned model comprises a speaker model per user, a gait model per user and a labelling of the elements of the models by a user identifier. In a further variant, the learned model is obtained by training a Factorial Hidden Markov Model comprising two independent hidden state sequences where the first hidden state sequence represents the sequence of alternating modalities, voice or gait, and the second hidden state sequence represents the sequence of alternating user. In a further variant, the training is done for a selected number of users.

In a second aspect, the disclosure is directed to a device for identifying users comprising a processor configured to: extract features from a captured audio signal comprising at least vocal utterances and footsteps of user; segment the extracted features according to voice or gait modality; build a sequence of observations from the segmented features; and identify the user by selecting, for each observation within the sequence, the couple of user and modality that maximises the probability that the observation was generated by the selected user in the selected modality according to a learned model. In a first variant of second aspect, the learned model comprises a speaker model per user, a gait model per user and a labelling of the elements of the models by a user identifier. In a further variant, the learned model is obtained by training a Factorial Hidden Markov Model comprising two independent hidden state sequences where the first hidden state sequence represents the sequence of alternating modalities, voice or gait, and the second hidden state sequence represents the sequence of alternating user. In a further variant, the training is done for a selected number of users. In a variant, the device of second aspect further comprises a microphone configured to capture audio signals. In a variant, the device of second aspect further comprises a memory configured to store at least the learned model.

In a third aspect, the disclosure is directed to a computer program comprising program code instructions executable by a processor for implementing any embodiment of the method of the first aspect.

In a fourth aspect, the disclosure is directed to a computer program product which is stored on a non-transitory computer readable medium and comprises program code instructions executable by a processor for implementing any embodiment of the method of the first aspect.

### BRIEF DESCRIPTION OF DRAWINGS

Preferred features of the present disclosure will now be described, by way of non-limiting example, with reference to the accompanying drawings, in which:
Figure 1 illustrates an exemplary home assistant ecosystem in which at least part of the disclosure may be implemented,
Figure 2A illustrates an exemplary flowchart of a training method to build the user model according to an embodiment of the disclosure,
Figure 2B illustrates an exemplary flowchart of a recognition method to identify one of the trained users according to an embodiment of the disclosure,
Figure 3A illustrates a temporal diagram of an exemplary situation where user identification is required,
Figure 3B illustrates a user identification model applied to the exemplary situation of figure 3A, according to a prior art solution,
Figure 3C illustrates a user identification model applied to the exemplary situation of figure 3A, according to an embodiment of the disclosure.

### DESCRIPTION OF EMBODIMENTS

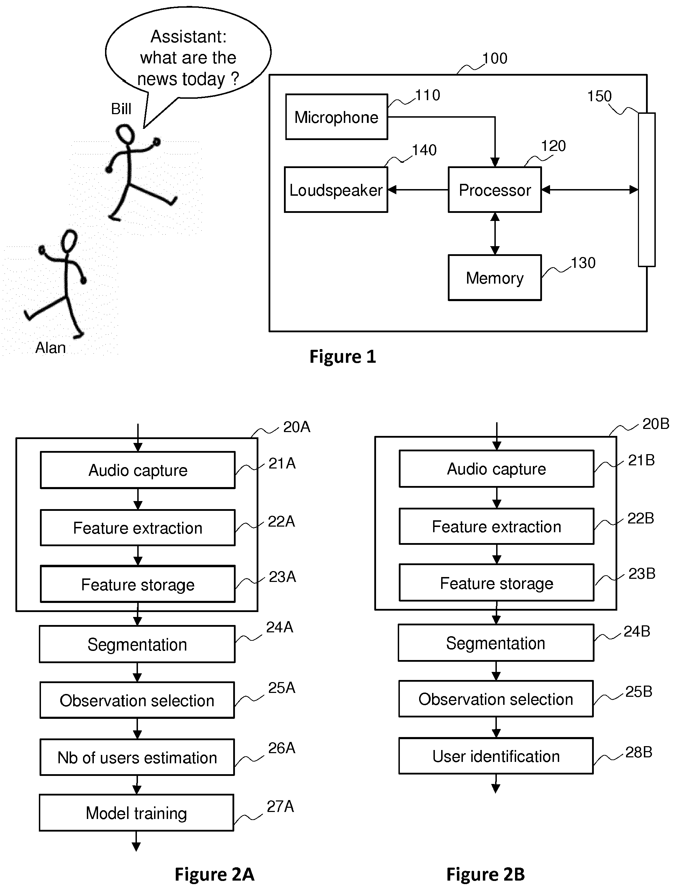

**Figure 1** illustrates an exemplary home assistant device (HAD) according to the prior art. The person skilled in the art will appreciate that the illustrated device is simplified for reasons of clarity. The HAD 100 interacts with a plurality of users and may interface through the communication interface 150 with external resources for example located on remote servers and providing knowledge and computing resources. The HAD 100 comprises at least a microphone 110 to capture an audio signal comprising the vocal utterances generated by the user making a vocal query and other noises of the environment including the footsteps performed by the users, a processor 120 configured to perform training of the user models and recognition of the trained users, memory 130 to store at least the user models and the captured audio signal, a loudspeaker 140 configured to provide vocal feedback to the user. The interaction exploits user identification in order to personalize the answers to user spoken queries. For example, in a same household using a single HAD 100, when Dad asks for the television program, he will get a personalized answer that includes a list of sport programs. When the teenager performs the same query, he will get a list of action movies, and so on, thanks to the user identification. In addition, the vocabulary, intonation and multiple other parameters of the feedback will also be personalized to match preferences of the identified user.

In an example of scenario used in the whole description, a first user Alan interacts with the HAD 100 and then walks away. A second user Bill comes in and starts interacting with the HAD 100 with the following query: "Assistant, what's the news today?". Since the user has been recognized, the response will be personalized.

The HAD 100 uses two distinct phases of operation: a training phase to build the model and a user recognition phase in which the model is applied to captured audio to identify the user.

**Figure 2A** illustrates an exemplary flowchart of a training method to build the user model according to an embodiment of the disclosure.

Step 20A is about data acquisition and comprises steps 21 A, 22A and 23A. This step 20A is iterated to acquire a plurality of recordings over a period of time, for example one week and get sufficient data to perform the training in good conditions. In step 21A, audio signals are captured by the microphone 110 and provided to the processor 120. In step 22A, the processor 120 performs a feature extraction on the captured samples. The output of this step is a set of feature vectors where each feature vector characterizes an audio frame. In one embodiment, conventional Mel-frequency cepstral coefficients (MFCC) are used in the feature extraction, representing the short-term power spectrum of a sound frame. In another embodiment, Linear Predictive Coding (LPC) is used to extract features from a frame. The duration of a single acquisition frame can vary. In a preferred embodiment, the duration is 25 ms and the step size between frames is 10ms, i.e. the frames overlap. The frame duration is chosen as a compromise. It depends on the sound duration and its characteristic variation over time, for a short duration frames will be short as well to extract the most relevant features. It also depends on the required response time, the shorter is the frame the quicker is the response you will get from your classifier. The overlapping allows to remove edge effect at the beginning and end of the frame as extraction features requires an FFT (Fast Fourier Transform) prior extraction. So abrupt transition will add artefact. In other embodiments, the duration is shorter, such as 10 ms or longer, such as 100ms. In step 23A, the extracted feature vectors are stored in memory 130.

In step 24A, the processor 120 segments the sequence of frames into three types of sub-sequence: "voice", "gait" and "other". This is done for example by using conventional diarization techniques. In one embodiment an initial Metric-Based Segmentation such as Bayesian Information Criterion (BIC) segmentation or Generalized Likelihood Ratio (GLR) segmentation is performed. It relies on the computation of a distance between two frames represented by their feature vectors to determine whether they belong to the same acoustic type or to different acoustic types, and therefore whether there exists a type change point in the audio at the point being analyzed or whether the two frames may be merged together into a segment. It is followed by BIC terminated hierarchical agglomerative clustering of the segments which groups similar segments together into clusters and a re-segmentation using Viterbi decoding which improves the new segmentation by adding temporal statistical constraints on the transitions between consecutive segments. Pre-trained Gaussian mixture models (GMMs) for voice and gait are then compared to each segment to enable classification as voice or gait or other. Another technique for feature segmentation is to use a Voice Activity Detection (VAD) module and a Gait Activity Detection (GAD) module to label all data segments as either voice, gait or other. The output of this step is a sequence of acoustic type values (Voice, Gait or other) where each type value characterizes an audio frame.

In step 25A, the processor 120 builds the sequence of observations. An observation is a vector representing a subsequence of consecutive frames which all belong to the same segment. In one embodiment observations are 60ms long, i.e. four frames in the case of a 25ms acquisition frame with 10ms overlap. The observation vector is a GMM of the MFCC coefficients computed on the 4 frames.

In step 26A, the processor estimates the number of users to be detected. A first technique for such estimation is by using unsupervised clustering techniques on the voice segments and simply counting the number of clusters. A second technique is to collect the information from another module. For example, the HAD 100 may store a user profile for each of the users. In this case, it is simple to get the number of users by counting the number of user profiles. A third technique is to ask the users themselves. A configuration phase can be used to acquire some information about the household, for example the list of users with, for each of them, some information such as name, age, preferences, limitations, etc. Thus, the list of users gives directly the number of users to be detected.

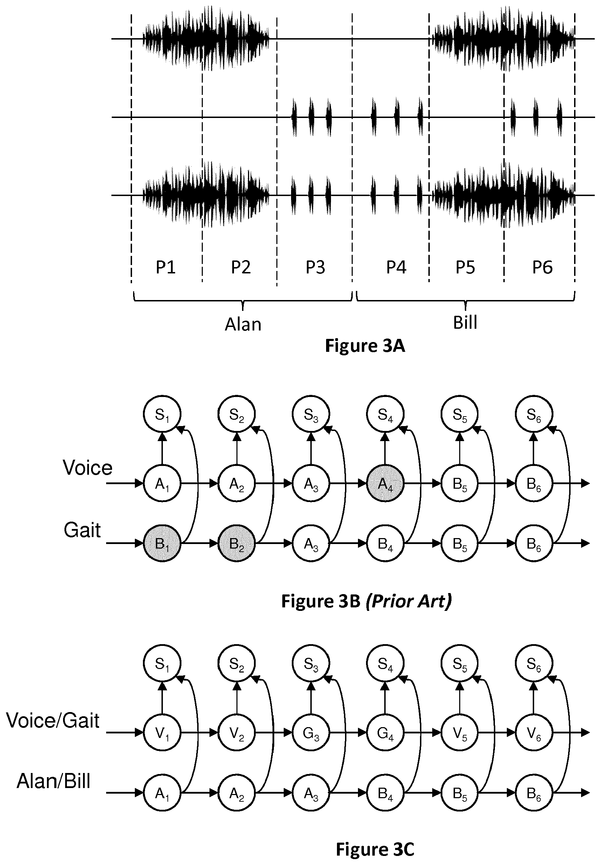

In step 27A, the processor uses the sequence of observations to train a model for the estimated number of users. The training uses Factorial Hidden Markov Model (FHMM) technique. This technique allows for a single observation to be conditioned on the corresponding hidden variables of a set of K independent Markov chains, rather than a single Markov chain. It is equivalent to a single HMM, with N^K states (assuming there are N states for each chain). We assume that the sequence of observation segments is generated from a left-to-right FHMM, with K=2 mutually independent hidden state sequences. The first hidden state sequence represents the sequence of alternating modalities (gait or voice), while the second represents the sequence of alternating users. An example of such FHMM is illustrated in figure 3C. The sequence of observations is depicted on the first line, from S1 to S6. The observation vector is the concatenation of voice and gait features, computed from a segment of audio signal. Note, however, that the system considers only one type of features (voice or gait) at the given time instance, which is enforced by a proposed emission probability distribution. Such a model is useful for two reasons: i) it decouples different types of features used for capturing the user, from gait information (e.g., normalized scattering coefficients), and, ii) it alleviates interference when voice and gait are present at the same time (by giving priority to the dominant modality). The output of step 27A is a trained FHMM with one speaker model for each detected user, with one gait model for each detected user and with a labelling of the user number for the observations in the training set. Thus, the use of such FHMM leads to a better user model than conventional FHMMs since it exploits alternatively voice or gait modality with a higher weight on the dominant one. It also covers the case when one of the two modalities doesn't occur or when they occur simultaneously.

**Figure 2B** illustrates an exemplary flowchart of a recognition method to identify one of the trained users according to an embodiment of the disclosure. The steps 20B to 25B are respectively identical to the steps 20A to 25A described above. In step 28B, the processor 120 uses FHMM to label the observations by the identifier of the user who most probably generated them. In one embodiment, the Viterbi algorithm may be used. The Viterbi algorithm is a dynamic programming algorithm for finding the most likely sequence of hidden states that results in a sequence of observations. In our case it would retrieve the most likely sequence of hidden modality states as well as the most likely sequence of hidden users. For each observation, the modality and the user are chosen to maximise the probability that the observation was generated by this user in this modality.

In an embodiment, in step 28B of the user recognition phase, performance is improved by limiting the FHMM to only NO chosen users (NO < N). For example, the processor 120 estimates the NO dominant individuals by running the Viterbi algorithm on the trained FHMM, counts the number of states representing the same identity, and selects the most frequently labeled individuals. Then, by putting all probabilities of transition to the other users to zero, and renormalizing the remaining transition probabilities, the likelihood of the data for the FHMM limited to only NO users could be computed. This is useful in the case where the main FHMM was trained for a set of N users but at the time of labeling there is only NO < N users in the room. Two ways of limiting the number of users to NO are envisaged:
- use of an external information on the (maximum) number of users present at the time of the user recognition phase. This could be explicitly entered into the recognition system by a user configuration or received from another automated system capable of device/people counting in the home;
- use of an iterative approach where we increase the unknown current number of users NO from 1 to N and combine it with a model-complexity penalty (e.g. BIC) to decide how many users are present and apply the best limited FHMM.

It is to be noted that the invention creates user models corresponding to the users in the home but that the labelling of these models (e.g. user #1 = Alan, user #2 = Bill, etc.) is not covered.

**Figure 3A** illustrates a temporal diagram of an exemplary situation where user identification is required. The first line represents the audio signal related to the vocal utterances of the users. The second line represents to the audio signal related to the footsteps of users while moving and thus defines a gait information. In the HAD 100, these signals are both captured using a single microphone and thus result in an audio signal as represented in the third line where the voice and gait information are mixed together. In this diagram, the situation already introduced above is decomposed in six periods noted P1 to P6. P1 and P2 correspond to the periods where the first user Alan speaks. During P3, Alan walks away and thus his footsteps are recorded. Then comes Bill, walking in during P4. Bills speaks during P5, and then walks while continuing to speak, in period P6.

**Figure 3B** illustrates a user identification model applied to the exemplary situation of figure 3A, according to a prior art solution, as disclosed in IEEE TRANSACTIONS ON PATTERN ANALYSIS AND MACHINE INTELLIGENCE published in January 2012 "Multimodal Speaker Diarization" by Noulas A et al. The first line represents the observations S1 to S6 done on a sequence sampled of audio signals (described with features such as MFCC) from period P1 to P6. The generation of these signals is modelled using two hidden sequences, one for the voice represented in the second line and one for the gait represented in the third line. Each of these hidden sequences describes the sequence of alternating users (Ax corresponding to user Alan for period x and Bx corresponding to user Bill for period x). They each contribute to generating the observed signal using the user's voice (speaker) model and the user's gait model. Thus, when Alan speaks in P1 and P2, the hidden sequence for the gait is mistaken because it is trying to recognize the gait of a user even though no gait signal has been observed but Bill's gait may be the closest. Similarly, in P4, Alan's voice is recognized while there is no voice signal has been observed but only a gait signal. Such situation happens when the model learned with this prior art solution tends to detect Bill on gait sequence, even when no gait is present, and to detect Alan on voice sequence, even when no voice is present. Indeed, this model does not ensure consistency between the gait sequence labelling and the voice sequence labelling. As a result, in such situation, it is not possible in periods P1, P2 and P4 to decide which user is the right one. Hence the naive use of traditional diarization methods, with concatenated speech and gait features, can lead to identification errors and actually degrade performance compared to speech-only diarization.

**Figure 3C** illustrates a user identification model applied to the exemplary situation of figure 3A, according to an embodiment of the disclosure. The first line represents the observed sequence of sampled audio signals described with features such as MFCC, from periods P1 to P6. The generation of these signals is modelled using two hidden sequences: one of the sequences models the sequence of users as represented in the third line where Ax corresponds to user Alan for period x and Bx corresponds to user Bill for period x, and the other sequence models the sequence of alternating modalities (voice or gait) as represented in the second line where Vx corresponds to a voice modality and Gx corresponds to a gait modality. Combining these sequences (user + modality) enables the model to generate an observation represented in the first line.

Using this technique, the gait model is only used when there is no voice signal, and vice versa. Therefore, these models are not trying to recognize the gait of a user when no one is walking, nor his or her voice when no one is talking. Furthermore, only one sequence models the user sequence, and therefore there is no ambiguity left concerning the identity of the user.

As will be appreciated by one skilled in the art, aspects of the present principles and features described above can take the form of an entirely hardware embodiment, an entirely software embodiment (including firmware, resident software, micro-code and so forth), or an embodiment combining hardware and software aspects. For example, although the description is done using software components for the home assistant device 120 implementing the steps 20A to 27A and 20B to 28B, these steps can be implemented by hardware components that implement the feature as described.

Furthermore, although the different alternate embodiments have been described separately, they can be combined together in any form.

## Claims

1. A method for identifying user comprising:
- extracting (20B) features from a captured audio signal comprising at least vocal utterances and footsteps of user;
- segmenting (24B) the extracted features according to voice or gait modality;
- building (25B) a sequence of observations from the segmented features; and
- identifying (28B) the user by selecting, for each observation within the sequence, the couple of user and modality that maximises the probability that the observation was generated by the selected user in the selected modality according to a learned model.

2. The method of claim 1 wherein the learned model comprises a speaker model per user, a gait model per user and a labelling of the elements of the models by a user identifier.

3. The method of claim 2 wherein the learned model is obtained by training a Factorial Hidden Markov Model comprising two independent hidden state sequences where the first hidden state sequence represents the sequence of alternating modalities, voice or gait, and the second hidden state sequence represents the sequence of alternating user.

4. The method of claim 3 wherein the training is done for a selected number of users.

5. A device (100) for identifying users comprising a processor (120) configured to:
- extract features from a captured audio signal comprising at least vocal utterances and footsteps of user;
- segment the extracted features according to voice or gait modality;
- build a sequence of observations from the segmented features; and
- identify the user by selecting, for each observation within the sequence, the couple of user and modality that maximises the probability that the observation was generated by the selected user in the selected modality according to a learned model.

6. The device of claim 5 wherein the learned model comprises a speaker model per user, a gait model per user and a labelling of the elements of the models by a user identifier.

7. The device of claim 6 wherein the learned model is obtained by training a Factorial Hidden Markov Model comprising two independent hidden state sequences where the first hidden state sequence represents the sequence of alternating modalities, voice or gait, and the second hidden state sequence represents the sequence of alternating user.

8. The device of claim 7 wherein the training is done for a selected number of users.

9. The device of claim 5 further comprising a microphone (110) configured to capture (21A, 21B) audio signals.

10. The device of claim 5 further comprising a memory (130) configured to store (23A) at least the learned model.

11. Computer program comprising program code instructions executable by a processor for implementing the steps of a method according to at least one of claims 1 to 4.

12. Computer program product which is stored on a non-transitory computer readable medium and comprises program code instructions executable by a processor for implementing the steps of a method according to at least one of claims 1 to 4.
